# FASCICULE DE BREVET EUROPEEN

(11) **EP 2 318 689 B1**
(45) Date de publication et mention de la délivrance du brevet: **20.03.2013**
(21) Numéro de dépôt: 09737083.7
(22) Date de dépôt: 20.07.2009
(51) Int. Cl.: F02M 65/00, G01F 3/16

(54) **PROCEDE PERMETTANT D'ANALYSER LE DEBIT D'INJECTION COUP PAR COUP FOURNI PAR UN SYSTEME D'INJECTION DE CARBURANT UTILISE DANS UN MOTEUR THERMIQUE DE FORTE PUISSANCE**
VERFAHREN ZUR ANALYSE DER RATE FÜR SCHRITTWEISE EINSPRITZUNG, DIE DURCH EIN IN EINEM HOCHLEISTUNGSVERBRENNUNGSMOTOR VERWENDETES KRAFTSTOFFEINSPRITZSYSTEM BEREITGESTELLT WIRD
METHOD FOR ANALYSING THE STEP-BY-STEP INJECTION RATE PROVIDED BY A FUEL INJECTION SYSTEM USED IN A HIGH POWER HEAT ENGINE

(30) Priorité: 05.09.2008 FR 0804881
(43) Date de publication de la demande: 11.05.2011
(73) Titulaire: EFS SA, 69700 Montagny (FR)
(72) Inventeur: SCHMIDT, François, F-69390 Millery (FR)
(74) Mandataire: Chevalier, Renaud Philippe
(86) Numéro de dépôt international: PCT/FR2009/051437
(87) Numéro de publication internationale: WO 2010/026321

(56) Documents cités:
- EP-A- 0 861 979
- DE-A1- 4 130 394
- FR-A- 2 795 139

## Description

La présente invention concerne un procédé permettant d'analyser le débit d'injection coup par coup fourni par un système d'injection de carburant utilisé dans un moteur thermique. Les systèmes d'injection concernés sont notamment ceux équipant les moteurs diésel. L'invention ici décrite s'applique, plus particulièrement, à des systèmes d'injection utilisés dans des moteurs de forte puissance, donc des systèmes d'injection à fort débit de carburant.

On connaît déjà des dispositifs de mesure conçus pour permettre aux constructeurs de systèmes d'injection et de moteurs thermiques d'effectuer la mise au point des injecteurs ainsi que les réglages et les vérifications de conformité en cours de fabrication et lors de l'installation de ces systèmes pour leur utilisation finale. Ces dispositifs de mesure sont utilisés en conjonction avec un banc d'essai spécifique, dont le rôle est principalement d'entraîner en rotation une pompe d'injection et de supporter les différents éléments du système d'injection en cours de test. Les mesures faites avec ce genre de dispositifs doivent permettre de connaître à la fois précisément les valeurs de volumes de carburant injectés et les temps ou angles d'injection.

A cet effet, on connaît déjà par le brevet français FR 2795139 A ou son équivalent le brevet européen EP 1187987 B1, au nom du Demandeur, un dispositif permettant d'analyser instantanément le débit d'injection coup par coup fourni par un système d'injection utilisé dans un moteur thermique, ce dispositif se caractérisant essentiellement par la combinaison de deux chambres de mesure.

Ainsi, le dispositif ici évoqué comporte une première chambre de mesure qui est une chambre de volume constant dans laquelle est injecté le carburant, chambre à laquelle sont associés un capteur de pression et un capteur de température qui mesurent respectivement la pression et la température régnant dans cette chambre, ainsi que des moyens permettant de vidanger au moins partiellement ladite première chambre de mesure.

Ce dispositif comporte aussi, en aval de la première chambre de mesure, une seconde chambre de mesure dans laquelle est envoyé le carburant vidangé hors de la première chambre de mesure, le volume de la seconde chambre de mesure étant variable selon le mouvement d'un piston dont le déplacement est mesuré à l'aide d'un capteur de déplacement.

Une section électronique pilote l'ensemble du dispositif, ladite section analysant aussi les informations reçues des différents capteurs.

Le principe de fonctionnement de ce dispositif est le suivant :

Lorsque le dispositif est prêt à effectuer une mesure, c'est-à-dire lorsque du carburant est présent dans les deux chambres de mesure et qu'une pression de consigne prédéterminée règne dans la première chambre de mesure, une injection est réalisée. Celle-ci provoque une augmentation de la pression dans la première chambre de mesure, liée à la quantité de carburant injectée, aux caractéristiques du carburant, aux conditions d'environnement et notamment la température et la pression initiale, et au volume de la chambre. A la fin de l'injection, le carburant contenu dans la première chambre de mesure est partiellement vidangé dans la seconde chambre de mesure, la pression dans la première chambre de mesure étant ainsi ramenée à sa valeur initiale de consigne et cette première chambre de mesure étant prête alors à recevoir une nouvelle injection. Le carburant qui arrive dans la seconde chambre de mesure fait augmenter le volume de cette chambre de mesure, en poussant le piston. Le déplacement du piston est mesuré et, connaissant le diamètre du piston, une partie de la section électronique calcule le volume exact du carburant. Cette deuxième mesure permet à la section électronique de calibrer, à tout instant et très exactement, les mesures qui sont faites par la première chambre de mesure.

Dans une forme de réalisation avantageuse du dispositif, décrite dans les documents de brevets précités, une électrovanne rapide pilotée par une partie de la section électronique, et un déverseur, sont disposés entre les deux chambres de mesure pour vidanger partiellement la première chambre de mesure après une injection jusqu'à retrouver dans cette première chambre de mesure la pression qui régnait dans celle-ci avant l'injection considérée. Dans ce cas, la section électronique comporte encore avantageusement une fonction de compensation, permettant de tenir compte d'une éventuelle différence de pression dans la première chambre de mesure après deux vidanges successives.

Le terme « carburant », ici employé pour qualifier le fluide utilisé dans le dispositif, en particulier le fluide remplissant les deux chambres de mesure et aussi le fluide injecté, désigne un véritable carburant ou, de préférence, un fluide qui présente des caractéristiques hydrauliques proches de celles d'un carburant mais avec une température de point d'éclair bien plus élevée que celle d'un carburant, afin de minimiser les risques d'incendie et d'explosion.

Dans l'ensemble, la première chambre de mesure, de volume constant, permet de fournir avec précision la « forme » de l'injection, tandis que la seconde chambre de mesure, de volume variable, permet de mesurer la quantité de carburant injectée. Le traitement effectué dans la section électronique permet de compenser les défauts de chacune des mesures par les qualités de l'autre.

Le dispositif existant, rappelé ci-dessus, est plus particulièrement adapté à des injecteurs qui délivrent une quantité de carburant faible ou moyenne, typiquement jusqu'à 100 litres par heure.

Pour la mise au point d'injecteurs et de moteurs de forte puissance, tels que ceux utilisés pour la propulsion des navires ou pour l'entraînement de groupes électrogènes de grande taille, il est nécessaire de pouvoir effectuer des mesures de débit d'injection instantané, coup par coup, pour des débits plus importants.

La réalisation à cet effet d'un dispositif de mesure de plus grande taille, simplement homothétique du dispositif connu rappelé ci-dessus, se heurte à des difficultés pour réaliser la seconde chambre de mesure, c'est-à-dire la chambre de volume variable qui sert à effectuer une mesure volumique par l'intermédiaire du déplacement d'un piston.

Pour la première chambre de mesure, qui est de volume constant et sert à réaliser une mesure instantanée de l'augmentation de pression pendant l'injection dans ce volume déjà rempli de fluide, il n'existe pas de difficulté technique à en augmenter simplement les dimensions pour l'adapter à un débit plus important. Au lieu d'un volume typiquement inférieur à un litre, propre aux réalisations antérieures, il est aisé de prévoir un volume de valeur supérieure, adaptée à la pompe d'injection et/ou à l'injecteur qui se trouve en essai. La valeur de ce volume est à déterminer de manière à obtenir une augmentation typique de la pression de quelques bars ou dizaines de bars, dans la première chambre de mesure, au cours d'une seule injection, ce qui conduit à un volume typique de quelques litres ou dizaines de litres pour cette chambre, sans que ces valeurs soient limitatives. Ainsi, il n'y aurait pas d'inconvénient de principe à utiliser des volumes encore beaucoup plus importants, si nécessaire, pour mesurer de très gros débits instantanés. La réalisation d'un tel volume reste en effet simple, et ne pose pas de problème technique particulier. Elle peut éventuellement impliquer de réaliser une pièce relativement épaisse donc lourde, du fait qu'elle doit résister à une pression interne pouvant s'élever typiquement jusqu'à 200 bars, mais ces conditions ou exigences ne sont pas inhabituelles pour une instrumentation du type ici concerné. De plus, s'agissant de réaliser une chambre de volume constant, sans pièce mobile ni autre élément délicat, cette pièce ne sera pas coûteuse et elle sera particulièrement robuste, quel que soit son volume intérieur.

Par contre, en ce qui concerne la seconde chambre de mesure de volume variable avec piston intérieur, des difficultés se présentent car cette chambre doit répondre à des impératifs techniques très stricts, dont les principaux sont les suivants :
- Le piston doit coulisser parfaitement, sans blocage ni fuites, dans le cylindre qui délimite la chambre de mesure, alors que la température globale de cette chambre est en général maintenue relativement basse, typiquement entre 40 et 70° C, mais que la température instantanée au niveau du nez de l'injecteur est élevée et peut dépasser 200° C pour les systèmes d'injection modernes à très haute pression, typiquement supérieure à 2000 bars.
- Le piston doit être le plus léger possible afin de réagir rapidement aux variations de volume résultant de la vidange de carburant dans la chambre de mesure, ce qui conduit à réaliser le piston avec une conformation creuse et avec une épaisseur de paroi très faible.
- L'ensemble constitué par le cylindre qui délimite la chambre de mesure, et par le piston monté coulissant dans ce cylindre, doit cependant être très robuste pour supporter sans dommages de très nombreux cycles d'injections de carburant, donc de remplissage/vidange de cette chambre de mesure avec déplacement du piston.

On réalise habituellement des pistons dont le diamètre est compris entre 10 et 35 millimètres, et qui décrivent une course comprise entre 1 et 10 millimètres, ce qui correspond à un volume unitaire de mesure compris entre 80 et 10000 mm³ environ. Il est d'expérience courante que les difficultés de réalisation croissent, aussi bien lorsqu'on essaye de réaliser des pistons d'un diamètre inférieur à 10 mm que lorsqu'on souhaite fabriquer des pistons d'un diamètre supérieur à 35 mm. En particulier, une augmentation de diamètre du piston, en vue d'adapter le dispositif et en particulier sa seconde chambre de mesure à des débits ou volumes élevés, ne serait donc pas une solution satisfaisante.

La présente invention vise à éviter ces difficultés, et elle a donc pour but de fournir une solution du genre ici considéré mais adaptée aux gros débits d'injection, typiquement supérieurs à 100 litres par minute, tout en restant économique.

A cet effet, l'invention a pour objet un procédé permettant d'analyser le débit d'injection coup par coup fourni par un système d'injection de carburant utilisé dans un moteur thermique, le procédé comprenant, de façon connue :
- l'injection de carburant dans une première chambre de mesure de volume constant,
- la mesure de la pression et de la température régnant dans la première chambre de mesure,
- la vidange au moins partielle de cette première chambre de mesure vers une seconde chambre de mesure, dans laquelle est ainsi envoyé le carburant vidangé hors de la première chambre de mesure, la seconde chambre de mesure ayant un volume variable selon le déplacement d'un piston à l'intérieur de cette chambre de mesure,
- la mesure du déplacement du piston dans la seconde chambre de mesure, et
- l'analyse des mesures de pression et de température dans la première chambre de mesure et de déplacement du piston, dans la seconde chambre de mesure,
la vidange partielle de la première chambre de mesure dans la seconde chambre de mesure après une injection étant faite jusqu'à retrouver dans cette première chambre de mesure la pression régnant dans celle-ci avant l'injection,
ce procédé étant, selon l'invention, essentiellement caractérisé par le fait que la vidange partielle de la première chambre de mesure dans la seconde chambre de mesure après chaque injection est effectuée en plusieurs fois, successivement, la seconde chambre de mesure étant elle-même vidangée chaque fois, et par le fait que les mesures volumiques par déplacement du piston dans la seconde chambre de mesure, pour chaque remplissage/vidange de cette chambre de mesure, sont additionnées de manière à obtenir un volume total correspondant à la quantité de carburant délivrée par l'injecteur pour un coup d'injection.

Ainsi, selon la solution ici proposée, la structure du dispositif n'est pratiquement pas modifiée en particulier en ce qui concerne la seconde chambre de mesure, mais l'utilisation de cette seconde chambre de mesure est différente, ainsi que le processus de traitement des informations fournies par les capteurs :
- Dans le fonctionnement (déjà rappelé plus haut) du dispositif connu, après chaque coup d'injection, la première chambre de mesure est vidangée partiellement mais en une seule fois dans la deuxième chambre de mesure puis, dès que le système électronique a terminé les mesures de pression et de température dans la première chambre de mesure et de déplacement du piston dans la seconde chambre de mesure, ce qui se fait en un temps très court, la seconde chambre de mesure est vidangée à son tour partiellement, mais là aussi en une seule fois. La mesure de la quantité de carburant injectée (pour le coup d'injection considéré) est alors disponible, pour toute exploitation, et le dispositif est prêt à recevoir le coup d'injection suivant.
- Selon le procédé de l'invention, la première chambre de mesure est vidangée en plusieurs fois successivement, après chaque coup d'injection. Le volume vidangé est ainsi fractionné, et le système électronique pourra caractériser le volume de carburant injecté comme étant la somme de mesures partielles, dont chacune correspond au déplacement du piston lors de chaque cycle de remplissage/vidange de la seconde chambre de mesure. En d'autres termes, on utilise plusieurs fois la « petite » capacité de la seconde chambre de mesure pour mesurer une « grosse » quantité de carburant injectée dans la première chambre de mesure.

Ainsi, l'invention permet une adaptation aux gros débits d'injection, en évitant un agrandissement proportionnel de la seconde chambre de mesure et en conservant au contraire, pour cette chambre de mesure et en particulier pour son piston, des dimensions habituelles pour la mesure de quantités de carburant faibles ou moyennes. La solution ici proposée n'induit pratiquement aucun coût supplémentaire pour les composants du dispositif, seuls le fonctionnement et le processus de traitement des informations, essentiellement pilotés par un logiciel, étant différents.

A titre d'exemple, la vidange partielle de la première chambre de mesure dans la seconde chambre de mesure peut être fractionnée en une dizaine de cycles successifs de remplissage/vidange de la seconde chambre de mesure. Ainsi, une seconde chambre de mesure d'une capacité de 3000 mm³ pourra facilement mesurer un volume de 30000 mm³, correspondant à la capacité de la première chambre de mesure, en effectuant dix cycles successifs de remplissage/vidange partiels.

Le procédé de l'invention convient, en particulier, à des systèmes d'injection de carburant à fort débit mais à faible fréquence d'injection, c'est-à-dire adaptés à des moteurs thermiques à faible vitesse de rotation. Alors que le dispositif connu s'adresse à des systèmes d'injection qui peuvent délivrer typiquement 200 mm³ de carburant par coup d'injection et fonctionner jusqu'à typiquement 60 coups par seconde (c'est-à-dire pour des moteurs à quatre temps dont la vitesse de rotation peut attendre 7200 tours par minute), le procédé de l'invention pourra s'appliquer typiquement à des systèmes d'injection qui peuvent délivrer 20000 mm³ de carburant par coup d'injection et fonctionner jusqu'à deux coups par seconde. Les valeurs ici mentionnées ne servent qu'à donner des ordres de grandeur correspondant à des situations et besoins réels et actuels, mais elles n'ont bien évidemment aucun caractère limitatif.

L'invention sera mieux comprise à l'aide de la description qui suit, en référence au dessin schématique annexé illustrant, à titre d'exemple, un mode de mise en oeuvre du procédé d'analyse de débit d'injection objet de l'invention :
Figure 1 représente, de façon simplifiée, le dispositif utilisé avec ses deux chambres de mesure ;
Figure 2 est un diagramme illustrant le fonctionnement du dispositif de la figure 1, donc le déroulement du procédé selon l'invention.

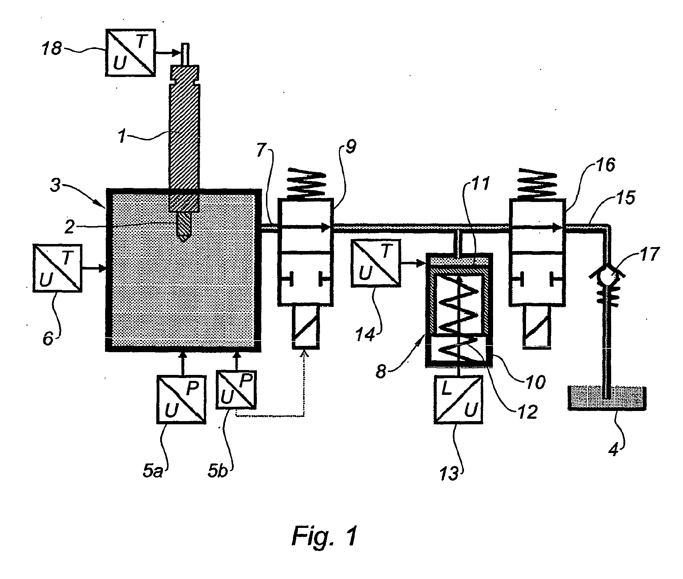

Sur la figure 1 est représenté un injecteur 1, dont la buse d'injection 2 se trouve dans une première chambre de mesure 3, qui est une chambre de volume constant. La première chambre de mesure 3 est, en utilisation, remplie d'un fluide qui présente des caractéristiques hydrauliques proches de celles d'un carburant, mais qui possède une température de point d'éclair beaucoup plus élevée que celle d'un carburant, afin de minimiser les risques d'incendie et d'explosion. Ce fluide est également le fluide qui est utilisé dans l'injecteur 1. Un réservoir 4 de ce fluide est prévu dans le dispositif.

Dans l'exemple illustré, la première chambre de mesure 3 comporte de façon avantageuse, en tant que capteur de pression, un convertisseur de pression dynamique 5a et un convertisseur de pression statique 5b. Le convertisseur de pression dynamique 5a, réalisable sous la forme d'un convertisseur piézoélectrique, est chargé de mesurer la composante dynamique pour laquelle on cherche une grande résolution - typiquement 0,001 bar - et une réponse rapide. Le convertisseur de pression statique 5b, réalisable sous la forme d'un convertisseur piézorésistif, est chargé de mesurer la composante statique pour laquelle on cherche essentiellement une grande dynamique, typiquement de 1 à 250 bars.

La première chambre de mesure 3 est aussi équipée d'un capteur de température 6, à réponse rapide.

La première chambre de mesure 3 comporte une sortie 7 qui est dirigée vers une seconde chambre de mesure 8, ainsi située (par référence au sens de circulation du fluide) en aval de la première chambre de mesure 3. Une électrovanne 9 est disposée entre la première chambre de mesure 3 et la seconde chambre de mesure 8.

La seconde chambre de mesure 8 est une chambre de volume variable. Elle est réalisée comme un cylindre 10 dans lequel est monté coulissant un piston 11, soumis à la poussée d'un ressort 12. Le déplacement du piston 11 est détecté par un capteur de déplacement 13, par exemple réalisé sous la forme d'un capteur inductif. Un convertisseur de température 14 est en outre associé à la seconde chambre de mesure 8.

De cette seconde chambre de mesure 8, part un canal de vidange 15, dont l'ouverture et la fermeture sont commandées par une électrovanne de vidange 16, en aval de laquelle est placé un clapet anti-retour 17. Le canal de vidange 15 ramène le fluide au réservoir 4 déjà mentionné.

Le dispositif comprend encore, d'une manière non représentée, une section électronique qui pilote l'ensemble du dispositif et analyse les informations reçues des différents capteurs. En particulier, la section électronique :
- Commande l'electrovanne 9 pour diriger le fluide, provenant de la sortie de la première chambre de mesure 3, vers la seconde chambre de mesure 8 ;
- Commande l'électrovanne de vidange 16 afin de vidanger la seconde chambre de mesure 8 et de ramener le fluide au réservoir 4 ;
- Reçoit et traite les signaux de mesure de pression et de température sion délivrés par les capteurs ou convertisseurs 5a, 5b et 6 associés à la première chambre de mesure 3 ;
- Reçoit et traite aussi le signal de déplacement du piston 11 de la seconde chambre de mesure 8, délivré par le capteur de déplacement 13.

Lors de l'utilisation du dispositif, pour remplir la première chambre de mesure 3, du fluide est pompé dans le réservoir 4 à l'aide d'une pompe (non représentée). Le fluide qui remplit cette première chambre de mesure 3 possède, initialement, une pression Po égale à une valeur de consigne prédéterminée. La mesure proprement dite peut alors commencer, selon le processus décrit ci-après :

L'injecteur 1 réalise, par sa buse 2, une injection de fluide dans la première chambre de mesure 3. Grâce aux convertisseurs a et 5b, on mesure alors la pression P et notamment l'augmentation de la pression dans la première chambre de mesure 3, ce qui permet de déterminer la courbe du débit de fluide injecté en fonction du temps, en effectuant éventuellement une correction en fonction de la température T détectée par le capteur 6. Lorsque la pression dans cette première chambre de mesure 3 n'augmente plus, on en déduit que l'injection est terminée.

L'électrovanne 9 est alors ouverte une première fois, pour transférer une quantité de fluide de la première chambre de mesure 3 vers la seconde chambre de mesure 8. Ainsi, la première chambre de mesure 3 est partiellement vidangée, tandis que le volume de la seconde chambre de mesure 8 augmente, ce qui s'accompagne d'un déplacement du piston 11 qui est mesuré par le capteur de déplacement 13.

Ensuite, l'électrovanne 9 est temporairement fermée, tandis que l'électrovanne 16 est ouverte pour vidanger la seconde chambre de mesure 8 et pour ramener ainsi dans le réservoir 4 le fluide que cette chambre 8 contenait.

L'électrovanne 9 est alors rouverte, pour effectuer une nouvelle vidange partielle de la première chambre de mesure 3 et un nouveau remplissage de la seconde chambre de mesure 8, s'accompagnant d'un nouveau déplacement du piston 11, également mesuré par le capteur 13, après quoi la seconde chambre de mesure 8 est de nouveau vidangée par ouverture de l'électrovanne 16.

Le même cycle de remplissage/vidange de la seconde chambre de mesure 8 est encore répété plusieurs fois, jusqu'à ce que la pression dans la première chambre de mesure 3 retrouve sa valeur de consigne initiale Po.

A chaque déplacement du piston 11 il correspond une variation de volume de la chambre de mesure 8. La section électronique détermine cette variation de volume, en la corrigeant en fonction du signal fourni par le capteur de température (convertisseur 14). De plus, la section électronique additionne les volumes partiels V1, V2, ...Vn de fluide déterminés pour les déplacements successifs du piston 11, de manière à obtenir un volume total, lequel correspond à la quantité de fluide qui a été injectée dans la première chambre de mesure 3.

A l'issue de cette phase de fonctionnement, la première chambre de mesure 3 ayant retrouvé sa pression initiale, une nouvelle injection peut avoir lieu dans cette première chambre de mesure 3, laquelle sera une nouvelle fois vidangée partiellement en plusieurs fois dans la seconde chambre de mesure 8, et ainsi de suite ...

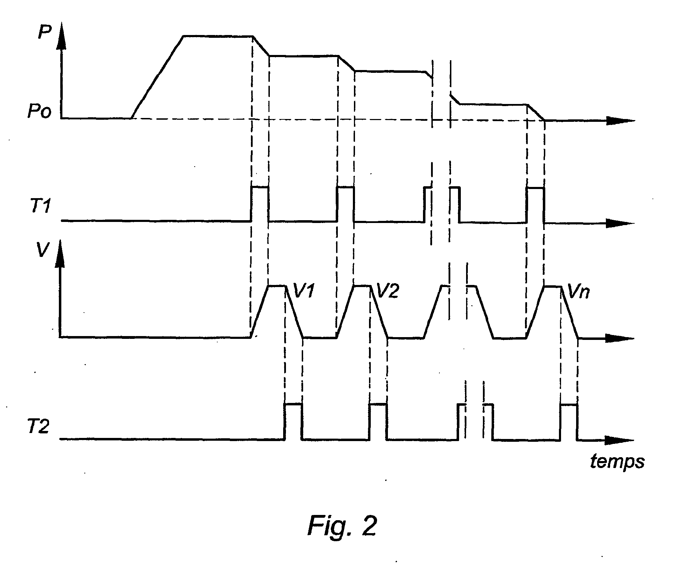

Ce fonctionnement est illustré par le diagramme de la figure 2, dont les lignes successives montrent (de haut en bas), pour un coup d'injection :
- La variation de la pression P dans la première chambre de mesure 3 ;
- Les temps d'ouverture T1 de l'électrovanne 9 ;
- Les variations du volume V de la seconde chambre de mesure 8 ;
- Les temps d'ouverture T2 de l'électrovanne de vidange 16.

Dans une variante non représentée, mais au fonctionnement d'ensemble similaire, l'électrovanne 9 placée entre les deux chambres de mesure 3 et 8 est remplacée par un régulateur de pression statique, asservi sur le convertisseur de pression statique 6, ce qui peut procurer une certaine réduction du coût de réalisation du dispositif.

Il est à noter que la température peut être mesurée et prise en compte en différents autres endroits, en particulier juste en amont de la première chambre de mesure 3, par un capteur de température supplémentaire 18, pour apprécier les variations rapides de température du fluide injecté avant qu'il soit mélangé et donc égalisé en température avec l'importante quantité de fluide déjà contenue dans cette première chambre 3.

On ne s'éloignerait pas du cadre de l'invention, telle que définie dans les revendications annexées, par des modifications des détails constructifs du dispositif de mise en oeuvre du procédé, ou par des adaptations de fonctionnement, en particulier en prévoyant un nombre quelconque de cycles successifs de remplissage/vidange de la seconde chambre de mesure, pour chaque vidange de la première chambre de mesure donc à chaque coup d'injection.

## Revendications

1. Procédé permettant d'analyser le débit d'injection coup par coup fourni par un système d'injection de carburant dans un moteur thermique, le procédé comprenant :
- l'injection de carburant dans une première chambre de mesure (3), de volume constant,
- la mesure de la pression (P) et de la température (T) régnant dans la première chambre de mesure (3),
- la vidange au moins partielle de cette première chambre de mesure (3) vers une seconde chambre de mesure (8), dans laquelle est ainsi envoyé le carburant vidangé hors de la première chambre de mesure (3), la seconde chambre de mesure (8) ayant un volume (V) variable selon le déplacement d'un piston (11) à l'intérieur de cette chambre de mesure (8),
- la mesure du déplacement du piston (11) dans la seconde chambre de mesure (8), et
- l'analyse des mesures de pression (P) et de température (T) dans la première chambre de mesure (3) et de déplacement du piston (11) dans la seconde chambre de mesure (8),
la vidange partielle de la première chambre de mesure (3) dans la seconde chambre de mesure (8) après une injection étant faite jusqu'à retrouver dans cette première chambre de mesure la pression (Po) régnant dans celle-ci avant l'injection,
**caractérisé en ce que** la vidange partielle de la première chambre de mesure (3) dans la seconde chambre de mesure (8) après chaque injection est effectuée en plusieurs fois, successivement, la seconde chambre de mesure (8) étant elle-même vidangée chaque fois, et **en ce que** les mesures volumiques par déplacement du piston (11) dans la seconde chambre de mesure (8), pour chaque remplissage/vidange de cette chambre de mesure, sont additionnées de manière à obtenir un volume total correspondant à la quantité de carburant délivrée par l'injecteur (1) pour un coup d'injection.

2. Procédé selon la revendication 1, **caractérisé en ce que** la vidange partielle de la première chambre de mesure (3) dans la seconde chambre de mesure (8) est fractionnée en une dizaine de cycles successifs de remplissage/vidange de la seconde chambre de mesure (8).

## Claims

1. A method making it possible to analyze the step-by-step injection rate provided by the fuel injection system used in a heat engine, the method comprising:
- injecting fuel into a first constant-volume measuring chamber (3),
- measuring the pressure (P) and temperature (T) reigning in the first measuring chamber (3),
- at least partially draining said first measuring chamber (3) towards a second measuring chamber (8), in which the fuel drained from the first measuring chamber (3) is sent, the second measuring chamber (8) having a volume (V) that varies depending on the movement of a piston (11) inside this measuring chamber (8),
- measuring the movement of the piston (11) in the second measuring chamber (8), and
- analyzing the pressure (P) and temperature (T) measurements in the first measuring chamber (3) and movement of the piston (11), in the second measuring chamber (8),
the partial draining of the first measuring chamber (3) in the second measuring chamber (8) after injection being done until the pressure (Po) reigning therein before the injection is reestablished,
**characterized in that** the partial draining of the first measuring chamber (3) into the second measuring chamber (8) after each injection is done in several stages, successively, the second measuring chamber (8) itself being drained each time, and **in that** the volume measurements by movement of the piston (11) in the second measuring chamber (8), for each filling/emptying of said measuring chamber, are added so as to obtain a total volume corresponding to the quantity of fuel delivered by the injector (1) for an injection step.

2. The method according to claim 1, **characterized in that** the partial draining of the first measuring chamber (3) into the second measuring chamber (8) is fractionated into approximately ten successive filling/draining cycles of the second measuring chamber (8).

## Patentansprüche

1. Verfahren zur Analyse der Rate schrittweiser Einspritzung, die durch ein System zur Einspritzung von Kraftstoff in einen Verbrennungsmotor bereitgestellt wird, wobei das Verfahren Folgendes umfasst:
- die Einspritzung von Kraftstoff in eine erste Messkammer (3) mit konstantem Volumen,
- die Messung des Drucks (P) und der Temperatur (T), die in der ersten Messkammer (3) herrschen,
- den mindestens teilweisen Ablass aus dieser ersten Messkammer (3) in eine zweite Messkammer (8), in die auf diese Weise der abgelassene Kraftstoff aus der ersten Messkammer (3) geschickt wird, wobei die zweite Messkammer (8) ein Volumen (V) aufweist, das je nach der Verschiebung des Kolbens (11) im Inneren dieser Messkammer (8) variabel ist,
- die Messung der Verschiebung des Kolbens (11) in der zweiten Messkammer (8), und
- die Analyse der Messungen des Drucks (P) und der Temperatur (T) in der ersten Messkammer (3) und der Verschiebung des Kolbens (11) in der zweiten Messkammer (8),
- den teilweisen Ablass von der ersten Messkammer (3) in eine zweite Messkammer (8) nach einer Einspritzung, die erfolgt, bis in dieser ersten Messkammer der Druck (Po) wieder erreicht ist, der in dieser von der Einspritzung herrschte,
**dadurch gekennzeichnet, dass** der teilweise Ablass aus der ersten Messkammer (3) in eine zweite Messkammer (8) nach jeder Einspritzung auf mehrere Male, aufeinander folgend, erfolgt, wobei die zweite Messkammer (8) selbst jedes Mal abgelassen wird, und dadurch, dass die Volumenmessungen durch die Verschiebung des Kolbens (11) in der zweiten Messkammer (8) für jede Füllung/jeden Ablass dieser Messkammer addiert werden, um ein Gesamtvolumen zu erhalten, das der Kraftstoffmenge entspricht, die durch den Einspritzer (1) im einen Einspritzungsschritt bereitgestellt wird.

2. Verfahren nach Anspruch 1, **dadurch gekennzeichnet, dass** der teilweise Ablass aus der ersten Messkammer (3) in eine zweite Messkammer (8) in etwa zehn aufeinander folgende Füll-/Ablasszyklen der zweiten Messkammer (8) unterteilt wird.
